# EUROPÄISCHE PATENTANMELDUNG

(11) **EP 1 443 744 A2**
(43) Veröffentlichungstag der Anmeldung: **04.08.2004**
(21) Anmeldenummer: 03028809.6
(22) Anmeldetag: 22.11.1996
(51) Int. Cl.: H04M 11/06, H04Q 7/32, G06K 7/10

(54) **Verfahren und Vorrichtung zur Datenübertragung mit einem Barcode-Lesegerät und einem Funktelefon**

(30) Priorität: 24.11.1995 DE 29518675 U
(62) Teilanmeldung aus: 96945749.8
(71) Anmelder: Firma Helicom Entwicklungsgesellschaft für Telekommunikation und Medientechnik MBH, 48291 Telgte (DE)
(72) Erfinder: Kemper, Martin, Dr., 48167 Münster (DE)
(74) Vertreter: Habbel, Ludwig (Lutz), Dipl.-Ing.

(57) **Zusammenfassung**

Die Erfindung bezieht sich auf ein Verfahren zum Erfassen und Übertragen von Daten, wobei die Daten zunächst mittels eines Barcode-Lesegerätes erfasst werden, und zu einem Funktelefon übertragen werden, wobei die erfassten Daten mittels des Funktelefons zu einer zentralen Auswertungsstelle übermittelt werden, und dass eine Rückübermittlung von Daten erfolgt, mit denen beispielsweise die Benutzerführung in einem Display des Barcode-Lesegerätes festgelegt wird.

## Beschreibung

Die Erfindung betrifft ein Verfahren nach dem Oberbegriff des Anspruchs 1 und eine Vorrichtung nach dem Oberbegriff des Anspruchs 4 zur Durchführung dieses Verfahrens.

Eine Vorrichtung nach dem Oberbegriff des Anspruchs 2 ist aus der EP 645 728 A2 bekannt. Diese Druckschrift betrifft unterschiedliche Telefone, die unter anderem auch beispielsweise als sogenannte schnurlose Telefone im häuslichen Bereich eingesetzt werden können oder als sogenannte zellulare Telefone, die innerhalb großräumiger Gebiete benutzt werden können und die handelsüblich als "Handy" bezeichnet werden.

Bei derartigen "Handy"-Telefonen schlägt die EP 645 728 A2 eine Wahlhilfe vor: Telefonnummern sind in Barcode-Form vorgesehen, und bei dem mobilen Telefon können diese Telefonnummern eingelesen werden. Die Erfassung des Barcodes erfolgt über einen optischen Scanner mit beweglichem Abtaststrahl. Nach dem Einlesen der Telefonnummer kann der Wahlvorgang ausgelöst werden, ohne daß die komplette Telefonnummer eingetastet werden müßte. Die Datenübertragung ist im Sprechkanal vorgesehen, so daß erhebliche Kosten anfallen können je nach Länge der Telefonnummer.

Vorrichtungen zur Datenerfassung, mit einem Barcode-Lesegerät und mit einem mobilen Telefon, sind auch aus der EP 529 721 A2 bekannt. Dabei ist ein mobiles Telefon vorgesehen, welches mit einem oder mehreren fest angeschlossenen Telefonen kommuniziert. Telefonnummern der fest angeschlossenen Telefone sind in Barcode-Form vorgesehen, und bei dem mobilen Telefon können diese Telefonnummern eingelesen werden, da das mobile Telefon einen eigenen Barcode-Leser umfaßt. Mit einer entsprechenden Funktionstaste kann der Wahlvorgang nach dem Einlesen der Telefonnummer ausgelöst werden, ohne daß die komplette Telefonnummer eingetastet werden müßte.

Da es sich bei der Datenübertragung als Wahlhilfe um eine Datenübertragung handelt, der üblicherweise ein Gespräch folgt, sind die Kosten, die zunächst für die Datenübertragung anfallen, in der Regel unerheblich. Diese Datenübertragung im Sprechkanal ist jedoch dann nachteilig, wenn keine Verbindung zustande kommt oder der Partner besetzt ist: dann sind vergleichsweise teure Gesprächsgebühren angefallen, ohne daß ein Gespräch zustande gekommen ist.

Aus der DE 37 41 788 A1 ist es bekannt, Barcode-Informationen durch einen Lesestift aufzunehmen und diese Informationen mittels einer MFV-Sendeeinrichtung über die Telefonleitung zu übertragen, während sich das Telefon im Gesprächszustand befindet, so daß in Abhängigkeit vom Umfang der zu übermittelnden Daten erhebliche Übertragungskosten anfallen können.

Aus der Praxis ist bekannt, in ein Barcode-Lesegerät eingelesene Daten drahtlos zu übertragen. Auf diese Weise ist beispielsweise im Krankenhausbereich eine schnelle und unkomplizierte Erfassung von Dienstleistungen, Medikationen oder Patientendaten und deren Weiterleitung an eine zentrale Auswertungsstelle möglich. Bei dieser Vorrichtung ist nachteilig, daß sie fest innerhalb eines Gebäudes installiert ist und daher für mobile Einsatzdienste nicht verfügbar ist.

Der Erfindung liegt die Aufgabe zugrunde, ein gattungsgemäßes Verfahren und eine gattungsgemäße Vorrichtung dahingehend zu verbessern, daß mit einfach aufgebauten und einfach bedienbaren Geräten eine möglichst vielseitige Nutzung ermöglicht wird.

Diese der Erfindung zugrunde liegende Aufgabe wird durch ein Verfahren mit den Verfahrensschritten des Anspruchs 1 und durch eine Vorrichtung mit den Merkmalen des Anspruchs 4 gelöst.

Die Erfindung schlägt mit anderen Worten eine Verfahrensweise vor, der zufolge von einem Barcode-Lesegerät erfaßten Daten an ein Funktelefon, beispielsweise eines der handgehaltenen "Handys" übermittelt werden, so daß sie auch bei unterschiedlichsten Einsatzorten ohne Zeitverzug einer zentralen Auswertungsstelle zur Verfügung gestellt werden können. Die Nutzung derartiger Funktelefone zur Datenübertragung ist beispielsweise aus dem Bereich der Telefaxübermittlung bekannt. Diese Verfahrensweise löst die vorgenannte Aufgabe durch folgende Vorteile:
■ Die Geräte können einfach aufgebaut sein, weil teilweise handelsübliche Geräte, wie ein handelsübliches Funktelefon oder ein handelsübliches Barcode-Lesegerät, verwendet werden können und insofern keine aufwendigen, multifunktionalen Geräte neu geschaffen werden müssen.
   Dies ist für die Herstellung und den Verkauf der Geräte wirtschaftlich vorteilhaft, und bei Funktionsausfällen muss lediglich das betroffene Gerät ausgetauscht oder repariert werden und nicht ein komplexeres und dementsprechend komplizierteres oder teureres multifunktionales Gerät.
■ Die Geräte ermöglichen dem Benutzer eine einfache Bedienung: einerseits aufgrund der bekannten Funktionen der - wie vorerwähnt - handelsüblich und unverändert ausgestalteten Geräte, andererseits durch die Rückübermittlung von Daten von der zentralen Auswertungsstelle zum Funktelefon und zum Barcode-Lesegerät:
   hierdurch wird es ermöglicht, dem Benutzer Funktionshinweise zur Bedienung der Geräte zu liefern, so daß die Bedienung vereinfacht wird.
■ Die vorgeschlagene Verfahrensweise ermöglicht durch die vorerwähnte Rückübermittlung von Daten, dieselben, unveränderten Geräte an unterschiedliche Einsatzzwecke anzupassen, so dass sie vielseitig nutzbar sind. Es muss keine fest in den Geräten installierte Benutzerführung vorgesehen sein, welche die Geräte auf ein bestimmtes Einsatzgebiet festlegen würde.
   Vielmehr können die Geräte können bei ihrer Auslieferung vom Hersteller an den Kunden mit vergleichsweise geringem Aufwand für den kundentypischen Einsatzzweck eingerichtet werden. Es kann sogar vorgesehen sein, dass beispielsweise ein Geräte-Leasing- oder Vermietungs-Unternehmen dieselben Geräte abwechselnd Benutzern mit unterschiedlichen Einsatzgebieten zur Verfügung stellt, beispielsweise den Leasing- oder Mietkunden.
   Zudem kann durch die Rückübermittlung von Daten auf einfache Weise eine Anpassung an sich ändernde betriebliche Abläufe erfolgen, indem die Benutzerführung entsprechend angepasst wird.

Die vorgeschlagene Vorrichtung kann beispielsweise von häuslichen Pflegediensten genutzt werden, wo der Pfleger nach dem Erbringen einer Pflegedienstleistung diese erbrachten Pflegedienstleistungen sowie die dafür benötigte Zeit einer Zentrale übermittelt, beispielsweise aus seinem Fahrzeug heraus, so daß einerseits sämtliche Daten zur Rechnungstellung vorliegen, andererseits jedoch als besonderer Vorzug eine optimierte Zeitplanung durch die Zentralstelle ermöglicht wird: Es kann von der Zentralstelle für jeden Pfleger zunächst ein Tagesplan an Dienstleistungen aufgestellt werden. Verschiebungen dieses Zeitplanes durch besondere Umstände können mit Hilfe der vorgeschlagenen Vorrichtung unmittelbar von der Zentralstelle erfaßt werden, so daß diese aufgrund ihres Überblickes über die Situation sämtlicher Pfleger Korrekturen in den Tagesplänen vornehmen kann und den Einsatz der einzelnen Pfleger optimal koordinieren kann.

Ähnliche Einsatzgebiete ergeben sich für nahezu sämtliche andere mobile Dienstleistungsunternehmen, beispielsweise für Handwerker, Wachdienste, Kurierdienste u. dgl.

Ein Ausführungsbeispiel einer erfindungsgemäßen Vorrichtung und ihre Funktionsweise wird anhand der schematischen Zeichnung im folgenden näher erläutert.

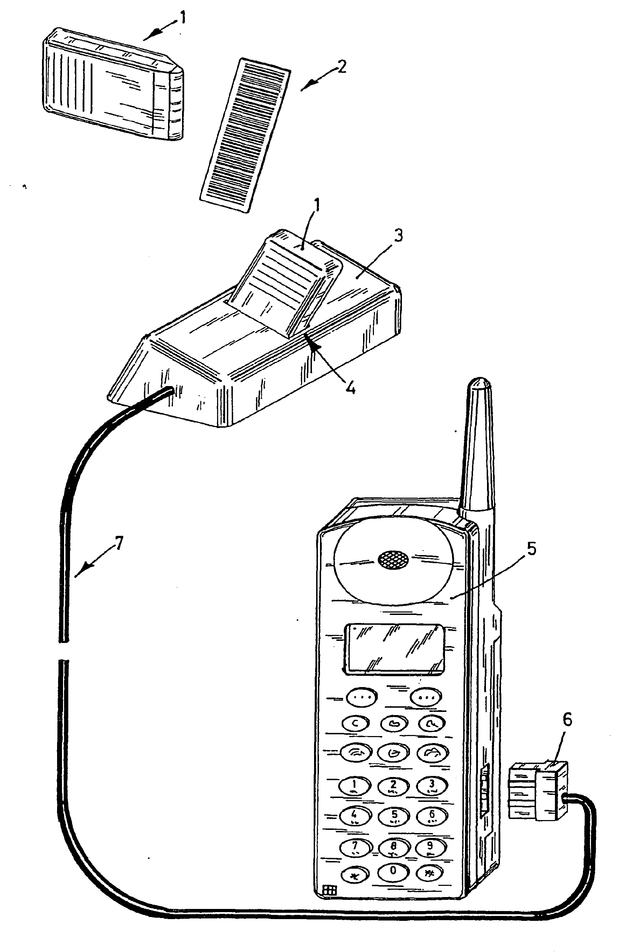

In der Zeichnung ist mit 1 schematisch ein Barcode-Lesegerät dargestellt, welches Daten aus einem mit 2 angedeuteten Barcode-Streifen ausliest.

Mit 3 ist eine Vorrichtung bezeichnet, die eine Halterung 4 in Form einer Aufnahmeöffnung aufweist, in welche das Barcode-Lesegerät 1 eingesteckt werden kann. Die Datenübermittlung vom Barcode-Lesegerät 1 zur Vorrichtung 3 kann über Kontakte erfolgen oder drahtlos, wie dies aus dem Stand der Technik bereits bekannt ist.

Die Vorrichtung 3 verfügt über Anschlußmittel zur Übertragung der vom Barcode-Lesegerät 1 empfangenen Daten zu einem Funktelefon 5. In der Zeichnung sind die Anschlußmittel in Form eines an der Vorrichtung 3 angeschlossenen Kabels 7 dargestellt, welches an seinem freien Ende einen Stecker 6 aufweist, der in eine Datenübertragungsbuchse des Funktelefons 5 einführbar ist.

Dabei kann vorgesehen sein, daß an der Vorrichtung 3 das Übertragungskabel nicht fest angeschlossen, sondern über eine Steckverbindung angebracht ist. Auf diese Weise können unterschiedliche Verbindungskabel mit unterschiedlichen Steckern 6 an die Vorrichtung 3 angeschlossen werden, wobei die Stecker 6 an das jeweils verwendete Funktelefon 5 angepaßt sind.

Weiterhin kann in Abwandlung des dargestellten Ausführungsbeispieles vorgesehen sein, eine drahtlose Datenübermittlung zwischen der Vorrichtung 3 und dem Funktelefon 5 vorzunehmen. Zu diesem Zweck könnte ein Stecker ähnlich dem dargestellten Stecker 6 vorgesehen sein, der ein Empfangsmodul für die drahtlos übermittelten Daten umfaßt, welche von einem Sendemodul der Vorrichtung 3 oder direkt vom Barcode-Lesegerät 1 ausgestrahlt werden.

Weiterhin kann in Abwandlung des dargestellten Ausführungsbeispiels vorgesehen sein, ein Display im Barcode-Lesegerät 1 vorzusehen, so daß der Benutzer Anzeigen ggf. in Klartext auf dem Barcode-Lesegerät 1 erkennen kann. Dies kann beispielsweise zur Kontrolle der eingelesenen Barcodes dienen, oder zur Benutzerführung verwendet werden. Es ist beispielsweise denkbar, daß der Benutzer ein Buch mit einer Vielzahl von Barcodes mit sich führt, wobei u. a. ein Barcode-Streifen 2 vorgesehen sein kann, der eine persönliche Identifizierungsnummer des Benutzers darstellt. Mit Hilfe des Displays kann der Benutzer bei Arbeitsbeginn aufgefordert werden, zunächst seine persönliche Identifizierungsnummer einzulesen, anschließend Ort und Zeit u. dgl. Für die einzelnen Arbeiten, beispielsweise Reparaturarbeiten, Pflegedienstleistungen od. dgl. kann vorgesehen sein, zu Beginn und / oder am Ende dieser Arbeiten die Zeit bzw. Zeitdauer sowie Art der ausgeführten Arbeit und ggf. den momentanen Aufenthaltsort mit Hilfe des Barcode-Lesegerätes 1 einzulesen. Die Daten werden im Barcode-Lesegerät 1 zwischengespeichert.

Anschließend wird das Barcode-Lesegerät 1 in die Halterung 4 der Vorrichtung 3 eingeführt, wodurch die Übermittlung der im Barcode-Lesegerät 1 zwischengespeicherten Daten an die Vorrichtung 3 erfolgt. Da das Barcode-Lesegerät 1 vorteilhaft über einen Akkumulator mit Energie versorgt wird, kann innerhalb der Vorrichtung 3 ein Akkulademodul vorgesehen sein, welches den Akku des Barcode-Lesegerätes 1 auflädt, ggf. kann durch eine entsprechende elektronische Schaltung eine Berechnung der erforderlichen Ladeintensität erfolgen.

Die nunmehr in der Vorrichtung 3 zwischengespeicherten Daten können anschließend über das Kabel 7, welches die Vorrichtung 3 mit dem Stecker 6 verbindet, zum Funktelefon 5 übertragen werden. Dabei kann ggf. ein standardisiertes Datenübermittlungsprotokoll verwendet werden. Zu diesem Zweck kann in der Vorrichtung 3 eine elektronische Schaltung vorgesehen sein, die die vom Barcode-Lesegerät 1 gelieferten Daten in einem derartig standardisierten Datenübermittlungsprotokoll an eine PCMCIA-Karte ausgibt, wobei am Kabel 7 das dem Stecker 6 gegenüberliegende Ende diese PCMCIA-Karte als Stecker aufweisen würde, mit der das Kabel 7 in die Vorrichtung 3 eingesteckt werden kann. Derartige Anschlußkabel für Funktelefone sind standardisiert und werden von den Telefonherstellern angeboten.

Alternativ zu einem derartig standardisierten Übermittlungsprotokoll kann vorgesehen sein, die Ausgabe der Daten aus der Vorrichtung 3 an das Funktelefon 5 entsprechend dem jeweils verwendeten Funktelefon 5 anzupassen und die Daten in dem jeweils telefonspezifischen Format zu übertragen.

Insbesondere in diesem Fall kann vorgesehen sein, anstelle der in der Zeichnung dargestellten Vorrichtung 3 lediglich einen entsprechend abgeänderten Stecker 6 zu verwenden, der den Anschluß an das Funktelefon ermöglicht und einerseits ein Empfangsmodul für die vom Barcode-Lesegerät 1 übermittelten Daten enthält. Aber auch bei einer notwendigen Umsetzung des Datenformates, wie sie im Ausführungsbeispiel anhand der Vorrichtung 3 beschrieben wurde, kann eine derartige Umsetzung ggf. in einem entsprechend abgewandelten Stecker 6 erfolgen, wobei ein derartiger Stecker die wesentlichen Merkmale der dargestellten Vorrichtung 3 beinhalten würde und selbst eine Vorrichtung zum Übertragen der Daten darstellen würde.

Das Funktelefon 5 wird üblicherweise mit Hilfe einer Berechtigungskarte betrieben. Dabei kann vorgesehen sein, eine Berechtigung ausschließlich zum Anwählen einer bestimmten Nummer vorzusehen, beispielsweise zur zentralen Verwaltung, nämlich der Einsatzleitung. Auf diese Weise wird gegenüber mobilen Datenfunktionsdiensten der Vorteil der Sprachverbindung geschaffen. Dennoch ist ein Mißbrauch ausgeschlossen.

Eine bidirektionale Datenübermittlung kann zwischen der zentralen Einsatzplanung und dem Funktelefon bzw. dem Code-Lesestift vorgesehen sein: Wenn zunächst die persönliche Identifizierungsnummer des Benutzers eingescannt wird und per Funktelefon an die Einsatzleitung übermittelt wird, kann von der Einsatzleitung eine Rückübermittlung von Daten erfolgen, mit denen beispielsweise die Benutzerführung im Display des Barcode-Lesegerätes 1 festgelegt wird. Auf diese Weise kann dasselbe Fahrzeug mit demselben Funktelefon 5, derselben Vorrichtung 3 und demselben Barcode-Lesegerät 1 abwechselnd von Benutzern unterschiedlicher Qualifikation oder sogar unterschiedlicher Berufe genutzt werden, wobei jeder Benutzer sein persönliches Buch mit Barcode-Streifen 2 und seiner persönlichen Identifizierungsnummer mit sich führt, in denen die für sein Einsatzgebiet typischen Angaben enthalten sind.

## Patentansprüche

1. Verfahren zum Erfassen und Übertragen von Daten,
wobei die Daten zunächst mittels eines Barcode-Lesegerätes (1) erfasst werden,
und zu einem Funktelefon (5) übertragen werden,
**dadurch gekennzeichnet,**
**dass** die erfassten Daten mittels des Funktelefons (5) zu einer zentralen Auswertungsstelle übermittelt werden,
und **dass** eine Rückübermittlung von Daten erfolgt, mit denen beispielsweise die Benutzerführung in einem Display des Barcode-Lesegerätes (1) festgelegt wird.

2. Verfahren nach Anspruch 1,
**dadurch gekennzeichnet,**
**dass** die vom Barcode-Lesegerät (1) gelieferten Daten, wenn sie zum Funktelefon (5) übertragen werden, in einem standardisierten Datenübermittlungsprotokoll an eine mit dem Funktelefon (5) verbundene PCMCIA-Karte ausgegeben werden.

3. Verfahren nach Anspruch 1 oder 2,
**dadurch gekennzeichnet,**
**dass** die erfassten Daten drahtlos vom Barcode-Lesegerät (1) übermittelt werden.

4. Vorrichtung zum Erfassen und Übertragen von Daten,
mit einem Barcode-Lesegerät (1),
und einem Funktelefon (5),
**gekennzeichnet durch**
das Barcode-Lesegerät (1) und das Funktelefon (5) die Übermittlung von **durch** das Barcode-Lesegerät (1) erfassten Daten wie auch eine Rückübermittlung von Daten ermöglichend ausgestaltet sind,
und dass am Barcode-Lesegerät 1 eine Anzeige vorgesehen ist, die in Abhängigkeit von den rückübermittelten Daten aktivierbar ist, beispielsweise derart, dass die Benutzerführung im Display des Barcode-Lesegerätes 1 festgelegt wird.

5. Vorrichtung nach Anspruch 4,
**gekennzeichnet durch**
ein Display im Barcode-Lesegerät (1) zur Darstellung von Anzeigen, beispielsweise in Klartext.

6. Vorrichtung nach Anspruch 4 oder 5,
**gekennzeichnet durch**
einen Stecker (6), der den Anschluß an das Funktelefon ermöglicht und seinerseits ein Empfangsmodul für die vom Barcode-Lesegerät (1) übermittelten Daten enthält.

7. Vorrichtung nach einem der Ansprüche 4 bis 6,
**gekennzeichnet durch**
ein Übertragungskabel, welches an eine die Datenübermittlung vom Barcode-Lesegerät (1) zum Funktelefon (5) ermöglichende Vorrichtung (3) über eine Steckverbindung anschliessbar ist, derart, dass unterschiedliche Übertragungskabel mit unterschiedlichen Steckern (6) an die Vorrichtung (3) anschliessbar sind, wobei die Stecker (6) an das jeweils verwendete Funktelefon (5) angepaßt sind.
